# EUROPÄISCHE PATENTSCHRIFT

(11) **EP 0 529 113 B1**
(45) Veröffentlichungstag und Bekanntmachung des Hinweises auf die Patenterteilung: **28.06.1995**
(21) Anmeldenummer: 91114050.7
(22) Anmeldetag: 22.08.1991
(51) Int. Cl.: B65G 65/48, A01F 25/20

(54) **Silo-Austragvorrichtung**
Discharging device for silo
Dispositif d'extraction pour silo

(43) Veröffentlichungstag der Anmeldung: 03.03.1993
(73) Patentinhaber: Schwäbische Hüttenwerke Gesellschaft mit beschränkter Haftung, D-73414 Aalen (DE)
(72) Erfinder: Faul, Josef, D-73433 Aalen (DE)
(74) Vertreter: Wasmuth, Rolf, Dipl.-Ing.

(56) Entgegenhaltungen:
- FR-A- 2 095 216
- FR-A- 2 312 436

## Beschreibung

Die Erfindung betrifft eine Silo-Austragvorrichtung nach dem Oberbegriff des Patentanspruches 1.

Eine solche Vorrichtung ist bekannt (DE-C-20 63 140). Sie dient dazu, das im Silo befindliche Schüttgut in der Nähe des Silobodens aufzulockern und den nach außen führenden Transportorganen zuzuführen, beispielsweise Schnecken, die unterhalb von Öffnungen des Silobodens angeordnet sind. Die federelastischen Räumarme können sich unter der Belastung durch das Silogut entgegen der Drehrichtung des Rotors zurückkrümmen, wobei sie sich an den Umfang des Rotors anlegen können. Dadurch bleibt das für den Rotorantrieb erforderliche Drehmoment innerhalb vertretbarer Grenzen. Von dieser weit zurück gekrümmten Stellung aus streben die unter Radialspannung stehenden Räumarme nach außen, wobei sich ihre endseitigen Räumwerkzeuge mit jeder Rotorumdrehung tiefer in die Schüttgutsäule in Richtung zum Silomantel eingraben. Dadurch kann sich in dem Schüttgut ein im Durchmesser ständig größer werdendes Gewölbe bilden, das spätestens dann einstürzt, wenn der das Gewölbe tragende ringförmige Bereich des Silogutes abgegraben ist. Die Enden der Räumarme befinden sich dann nahe am Silomantel. In dieser Lage werden sie entgegen dem Drehsinn des Rotors zurückgekrümmt gehalten, beispielsweise durch ein zwischen dem Räumarmende und dem Rotor gespanntes Seil. Das hat den Vorteil, daß ein großer Anteil der Belastung, die auf das Räumarmende und die dort befindliche Halterung wirkt, als Zugkraft-Komponente von dem Räumarm aufgenommen werden kann. Außerdem ergibt sich dadurch eine stetige Förderung des Silogutes in die üblicherweise radial verlaufende Öffnung des Silobodens.

Da der Räumarm über seine ganze Länge als Blattfederpaket mit durch Bügel aneinanderliegend gehaltenen Blattfedern ausgebildet ist, ergibt sich durch die Krümmungsänderung eine Verschiebung der Blattfedern gegeneinander. Dabei sind alle Blattfedern bis auf die äußere, an der die Halterung für das Räumwerkzeug befestigt ist, in der Halterung frei verschieblich. Diese äußere Blattfeder, deren Verformung durch Biegung am größten ist, muß auch die Zugkraftkomponente der auf das Räumwerkzeug wirkenden Belastung aufnehmen und ist darüberhinaus besonders stark dem Verschleiß durch die Bewegung im Schüttgut ausgesetzt. Auch an weiteren Teilen der Räumarme können besonders starke Verschleißerscheinungen auftreten, besonders im Bereich der Bügel, die das Blattfederpaket umfassen. Diese Bügel können in an sich bekannter Weise gegen das Blattfederpaket mittels Schenkelfedern verspannt werden, deren Wendel quer zur Längserstreckung des Blattfederpaketes liegt und deren Schenkel an der äußeren Blattfeder anliegen.

Der Erfindung liegt die Aufgabe zugrunde, die gattungsgemäße Silo-Austragvorrichtung derart weiterzubilden, daß ihre Betriebssicherheit verbessert und insbesondere die Standzeit des oder der Räumarme erhöht wird.

Zur Lösung der Aufgabe dienen die kennzeichnenden Merkmale des Patentanspruches 1. Infolge der Befestigung der Halterung an einer mittleren Blattfeder des Blattfederpaketes werden die Zug- und Torsionsbeanspruchungen von dem in der Mitte des Räumarmes liegenden Federblatt aufgenommen, das gegen Verschmutzung und Verschleiß weitgehend geschützt ist und wegen seiner Lage in der neutralen Zone des Räumarmes geringeren Biegebeanspruchungen ausgesetzt ist als die äußere Blattfeder bei der bekannten Ausführung. Da die mittlere Blattfeder von den übrigen Blattfedern an beiden Seiten abgestützt wird, ist auch ihre Torsionsbeanspruchung geringer. Durch die gleitende Abstützung der beiden äußeren Blattfedern in der Halterung wird das Blattfederpaket auch dort zusammengehalten und damit ein Aufspreizen der Blattfederenden vermieden.

Einem Verschleiß des Räumarmes wird auch bei einer Ausführung entgegengewirkt, bei der mindestens einige der Bügel gegen das Blattfederpaket mittels Schenkelfedern verspannt sind. Bei dieser Ausführung nach den kennzeichnenden Merkmalen des Anspruches 4 wird die bei zunehmender Krümmung des Räumarmes auftretende Bewegung der Federwendel in Richtung auf das Blattfederpaket durch einen Anschlag begrenzt, der an dem Bügel befestigt ist. Damit wird eine Berührung der Federwendel mit der ihr benachbarten äußeren Blattfeder ausgeschlossen, so daß an der Schenkelfeder kein Verschleiß durch Reibung auftritt und die Federschenkel nicht überdehnt werden.

Eine Verbesserung hinsichtlich der Verschleißfestigkeit des Räumarmes wird weiterhin mit dem Merkmal des Anspruches 6 erzielt; das in Umlaufrichtung des Räumarmes vorne liegende verschleißfeste Deckfederblatt schützt das von ihm abgedeckte Federblatt gegen Verschleiß durch Abrieb und kann zu diesem Zweck aus einem im Hinblick auf die Verschleißfestigkeit besonders ausgewählten Werkstoff bestehen, da das Deckblatt nicht die Federcharakteristik der übrigen Blattfedern aufweisen muß. Die Spannkraft des Räumarmes kann auch durch zusätzliche Blattfedern erhöht werden.

Um die Führung des Blattfederpaketes zu verbessern und damit auch die Standzeit des Räumarmes zu erhöhen, ist in Weiterbildung der Erfindung vorgesehen, daß an der Halterung und/oder an dem ihr benachbarten, das Blattfederpaket umgreifenden Bügel eine Gleitplatte angebracht ist.

Auch die Halterung und ein an ihr zu befestigendes Räumwerkzeug können im Hinblick auf eine möglichst hohe Standzeit des Räumarmes erfindungsgemäß besonders ausgebildet sein. Hierfür ist die Halterung an der Stirnseite des Blattfederpaketes mit einer zur Längserstreckung der Blattfederenden winklig ausgerichteten Befestigungsplatte versehen, die sich zweckmäßig in bezug auf die Umlaufrichtung des Räumarmes nach hinten erstreckt (Ansprüche 9 und 10), wobei das zugehörige Räumwerkzeug entsprechend den kennzeichnenden Merkmalen des Anspruches 11 von der Befestigungsstelle aus überwiegend senkrecht zur Ebene der Befestigungsplatte ausgerichtet ist, so daß es in der Zugachse des Räumarmes liegt. Von dem Räumwerkzeug werden daher auf das Blattfederpaket überwiegend nur Zugkräfte übertragen, wodurch Torsionsbrüche der Blattfedern vermieden werden.

Um für bestimmte Schüttgutarten auch andere Räumwerkzeuge einsetzen zu können, ist die Halterung mit einer weiteren Befestigungsplatte für verschiedenartige Räumwerkzeuge versehen.

Aus den Ansprüchen ergeben sich weitere Merkmale der Erfindung.

Die Erfindung wird im folgenden anhand der Zeichnungen näher erläutert. Es zeigen:
- Fig. 1: einen Rotor mit einem Räumarm schematisch in einer Teil-Draufsicht auf den Siloboden,
- Fig. 2: eine Teil-Seitenansicht eines Silos mit Rotor und Räumarmen entsprechend Fig. 1,
- Fig. 3: einen Räumarm in einer Seitenansicht entgegen der Umlaufrichtung gesehen, wobei der Räumarm gestreckt dargestellt ist,
- Fig. 4: eine Draufsicht auf den Räumarm nach Fig. 3,
- Fig. 5: einen Spannbügel für das Federpaket in Ansicht entsprechend Fig. 3, vergrößert dargestellt,
- Fig. 6: einen Schnitt nach VI-VI in Fig. 5,
- Fig. 7: das freie Ende des Räumarmes mit der Halterung, in Draufsicht entsprechend Fig. 4, vergrößert dargestellt,
- Fig. 8: ein Räumwerkzeug in Form einer kreisbogenförmig gekrümmten Kralle,
- Fig. 9: ein Räumwerkzeug in Form einer sichelartigen Kralle,
- Fig. 10: einen als Räumwerkzeug geeigneten Kratzer.

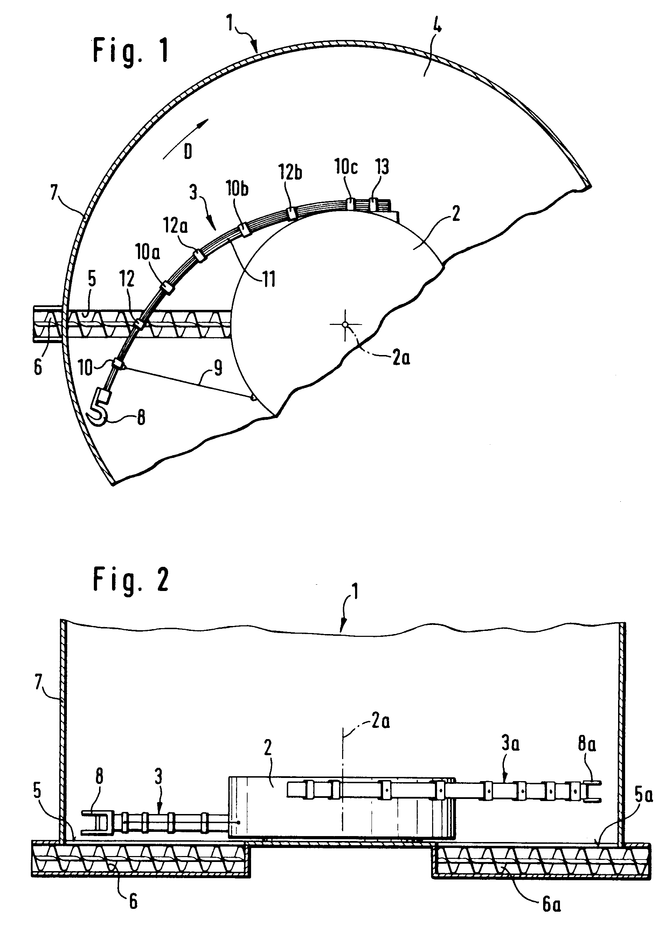

Die Fig. 1 und 2 zeigen schematisch in Teil-Draufsicht bzw. Teil-Seitenansicht einen in einem Silo 1 befindlichen Rotor 2, an dem zwei Räumarme 3 und 3a befestigt sind. Beim Antrieb des Rotors 2 laufen die Räumarme 3 und 3a in Richtung des Pfeiles D um. Sie bewegen sich dabei nahe oberhalb des Silobodens 4. Der Räumarm 3a liegt nach Fig. 2 etwas höher, kann aber auch auf gleicher Höhe wie der Räumarm 3 liegen. Im Siloboden 4 sind zwei radiale Öffnungen 5 und 5a vorhanden, unter denen je ein Schneckentrog mit einer Förderschnecke 6 bzw. 6a liegt, die das in den Trog gelangte Silogut austrägt. Wie Fig. 1 zeigt, ist der Räumarm 3 am Rotor 2 in etwa tangentialer Ausrichtung befestigt und von dort aus entgegen der Umlaufrichtung D zurückgekrümmt. Dargestellt ist die maximale Erstreckung des Räumarmes 3 in Richtung auf den Mantel 7 des Silos, wobei ein am freien Ende des Räumarmes befestigtes Räumwerkzeug 8 nahe am Silomantel liegt. In dieser zurückgekrümmten Lage wird der Rotorarm durch ein Seil 9 gehalten, das dabei zwischen dem Rotor 2 und einem nahe am Ende des Räumarmes befindlichen Bügel 10 gespannt ist. Der Räumarm 3 besteht im wesentlichen aus einem Blattfederpaket 11, dessen Blattfedern durch den Bügel 10 und mehrere weitere gleiche Bügel 10a, 10b und 10c sowie außerdem durch Spannbügel 12, 12a und 12b aneinanderliegend gehalten werden.

Wenn der Rotor 2 um seine Drehachse 2a angetrieben wird und das Silogut auf dem Siloboden 4 über dessen ganze Fläche lastet, werden die gegen den Gutwiderstand anlaufenden Räumarme 3 und 3a zunächst in eine Ausgangslage zurückgekrümmt, in der sie über einen Teil ihrer Länge oder vollständig an der zylindrischen Wandung des Rotors 2 anliegen. Für den umlaufenden Antrieb der Räumarme ist darum kein sehr großes Drehmoment erforderlich. Das Räumwerkzeug 8 - und ebenso das Räumwerkzeug 8a des Räumarmes 3a - lockert das Gut zunächst in der Nähe des Rotors 2 auf, wobei sich der federelastische Räumarm 3 nach außen in Richtung auf den Silomantel bewegt. Die Räumarme überstreichen bei ihrem Umlauf die radialen Öffnungen 5 und 5a des Silobodens und fördern dadurch das Gut durch die Öffnung hindurch zu den Förderschnecken 6 und 6a. Die zurückgekrümmte Lage der Räumarme ergibt dabei eine stetige Abgabe des Gutes an die Förderschnecken. Die Räumarme verhindern auch eine Brückenbildung im Silogut oberhalb des Silobodens, durch die das Nachströmen des Gutes blockiert werden könnte. Solche Brücken oder Gewölbe werden zum Einsturz gebracht, sobald die Räumwerkzeuge 8 und 8a in die Nähe des Silomantels 7 gelangen und damit eine ringförmige Verdichtung des Gutes, auf der sich ein solches Gewölbe abstützen könnte, beseitigen oder verhindern.

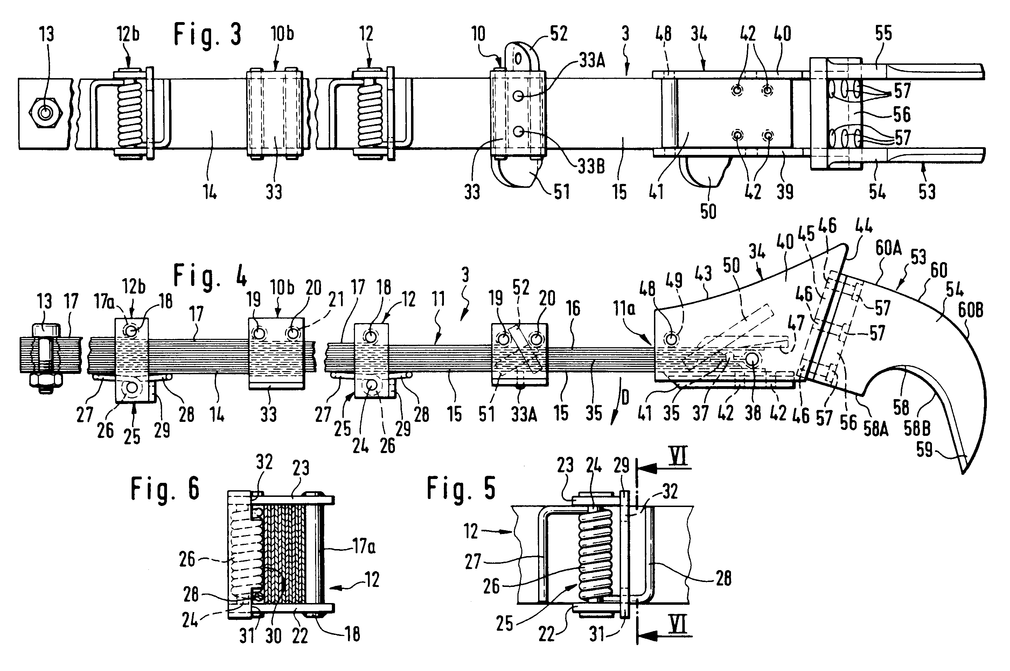

Die konstruktive Gestaltung der Räumarme ist anhand einer Ausführungsform des Räumarmes 3 in den Fig. 3 bis 7 dargestellt.

Das Blattfederpaket 11 besteht aus fünfzehn Blattfedern, die an dem am Rotor zu befestigenden inneren Ende des Räumarmes mittels einer das Blattfederpaket durchsetzenden Schraube 13 und einer auf sie aufgesetzten Mutter unverschieblich miteinander verspannt sind. Auf der in Umlaufrichtung D (Fig. 1) vorderen Seite des Räumarmes liegt eine äußere Blattfeder 14, die sich über die ganze Länge des Blattfederpaketes erstreckt und in der Nähe des freien Endes 11a des Blattfederpaketes von einem Deckfederblatt 15 abgedeckt ist, das sich über etwa die halbe Länge des Blattfederpaketes erstreckt. Damit der Räumarm 3 eine für seine Arbeitsweise optimale Federcharakteristik erhält, hat das Blattfederpaket 11 eine in Richtung seines freien Endes 11a stufenweise abnehmende Dicke. Hierfür sind die Blattfedern auf der der Blattfeder 14 gegenüberliegenden Seite des Blattfederpaketes unterschiedlich lang. Am freien Ende 11a besteht das Blattfederpaket dementsprechend nur aus neun Blattfedern und dem Deckfederblatt 15, wobei die diesem Deckfederblatt gegenüberliegende äußere Blattfeder 16 wie die Blattfeder 14 über die ganze Länge des Blattfederpaketes reicht. Die in Umlaufrichtung D hinter dieser Blattfeder 16 liegenden fünf Blattfedern 17 sind unterschiedlich lang. Die an der Befestigungsschraube 13 außen liegende Blattfeder 17 erstreckt sich bis zu dem Spannbügel 12b und hat eine endseitige, durch Einrollen nach außen gebildete Windung 17a. Sie ist dort durch einen Bolzen 18 festgelegt, der die Windung 17a und die beiden das Federpaket 3 umgreifenden Schenkel des Spannbügels 12b durchsetzt (Fig. 4 und 6). Die benachbarte Blattfeder 17 erstreckt sich bis zum Bügel 10b und ist dort in gleicher Weise mittels eines Bolzens 19 festgelegt. Parallel zu dem Bolzen 19 ist im Bügel 10b ein Bolzen 20 angeordnet, der zwischen den beiden Bügelschenkeln von einer Hülse 21 umgeben ist, die zur gleitenden Abstützung der dort außen liegenden Blattfeder 17 dient, die ihrerseits bis zu dem nächstfolgenden Spannbügel reicht. Die übrigen Blattfedern 17 sind aufeinanderfolgend jeweils um dasselbe Maß länger und in gleicher Weise festgelegt und geführt. Es bildet damit jeweils eine der Blattfedern 17 auf der Strecke zwischen einem Spannbügel und dem nächstfolgenden Bügel die Rückseite des Federpaketes.

Da der Räumarm aus seiner Strecklage entgegen der Umlaufrichtung D gekrümmt ist (Fig. 1), wobei der Krümmungsradius von der jeweiligen Betriebsstellung des Räumarmes abhängt, ergibt sich eine wechselnde Differenz der Krümmungsradien an der Vorderseite und der Rückseite des Federpaketes. Einem damit verbundenen Aufspreizen der Blattfedern wirken die Spannbügel 12, 12a und 12b entgegen. Wie die Fig. 5 und 6 für den Spannbügel 12 zeigen, sind die beiden Bügelschenkel 22 und 23 auf der dem Bolzen 18 gegenüberliegenden Seite von einem Bolzen 24 durchsetzt, auf dem eine Schenkelfeder 25 mit ihrer Federwendel 26 gelagert ist. Die beiden Schenkel 27 und 28 sind rechtwinklig abgebogen und liegen beiderseits des Bügels 12 an der in Umlaufrichtung D vorderen Seite des Federpaketes 11 an (Fig. 4). Damit wird das Blattfederpaket zwischen dem Bolzen 18 und der Schenkelfeder 25 verspannt. Beim Durchbiegen des Räumarmes in dessen zurückgekrümmte Lage werden mit zunehmender Krümmung die Federschenkel 27 und 28 zunehmend belastet, wobei sich die äußere Blattfeder des Blattfederpaketes an die Federwendel annähert. Aus Fig. 4 ist dies in Verbindung mit Fig. 1 ersichtlich; in dem Spannbügel 12b, der nahe dem Rotor 2 liegt, hat die äußere Blattfeder 14 einen größeren Abstand von der Federwendel 26 als die äußere Feder, hier das Deckfederblatt 15 im Spannbügel 12. Um eine Berührung zwischen der äußeren Blattfeder 14 bzw. 15 und der Federwendel 26 und damit einen Verschleiß der Schenkelfeder zu vermeiden, ist an den Bügelschenkeln 22 und 23 eine Platte 29 befestigt, beispielsweise angeschweißt. Die Platte 29 begrenzt mit ihrer Oberkante 30 die Bewegung der äußeren Blattfeder 14 bzw. 15 in Richtung auf die Federwendel 26 und bildet daher einen Anschlag für die äußere Blattfeder 14 bzw. 15. Durch diesen Anschlag wird auch eine Überdehnung der Federschenkel 27 und 28 vermieden. Die Platte 29 hat an ihrem oberen Rand zwei seitliche Ausnehmungen 31 und 32. In der Ausnehmung 31 liegt der zum Bolzen 24 senkrechte Abschnitt des Federschenkels 28 mit Spiel, so daß er unter Belastung nach außen begrenzt ausweichen kann. Die andere Ausnehmung 32 ist lediglich zur Vereinfachung der Herstellung und Montage des Anschlages vorhanden, da die Platte 29 dadurch symmetrisch gestaltet ist. Es könnte auch auf der gegenüberliegenden Seite des Spannbügels eine gleiche Anschlagplatte angebracht sein, wodurch zusätzlich ein Schutz der Federwendel gegen Verschmutzung erreicht würde. Der Spannbügel könnte auch an der in Umlaufrichtung D vorderen Seite durch eine zusätzliche Platte verschlossen werden, um die Federwendel gegen Verschmutzung und Verschleiß zu schützen.

Die Bügel 10, 10a, 10b und 10c sind U-förmig und an dem Federpaket 11 so angeordnet, daß die offene Seite des U-Bügels hinter dem Federpaket liegt, bezogen auf die Umlaufrichtung D. Das Federpaket ist zwischen den auf der einen Seite liegenden Bolzen 19 und 20 und dem auf der anderen Seite liegenden Quersteg des Bügels gehalten. Auf diesen Quersteg, also an der Vorderseite des Federpaketes, ist als Verschleißschutz eine Platte 33 aufgesetzt, die dort angeschweißt oder mit Nieten 33A und 33B befestigt sein kann.

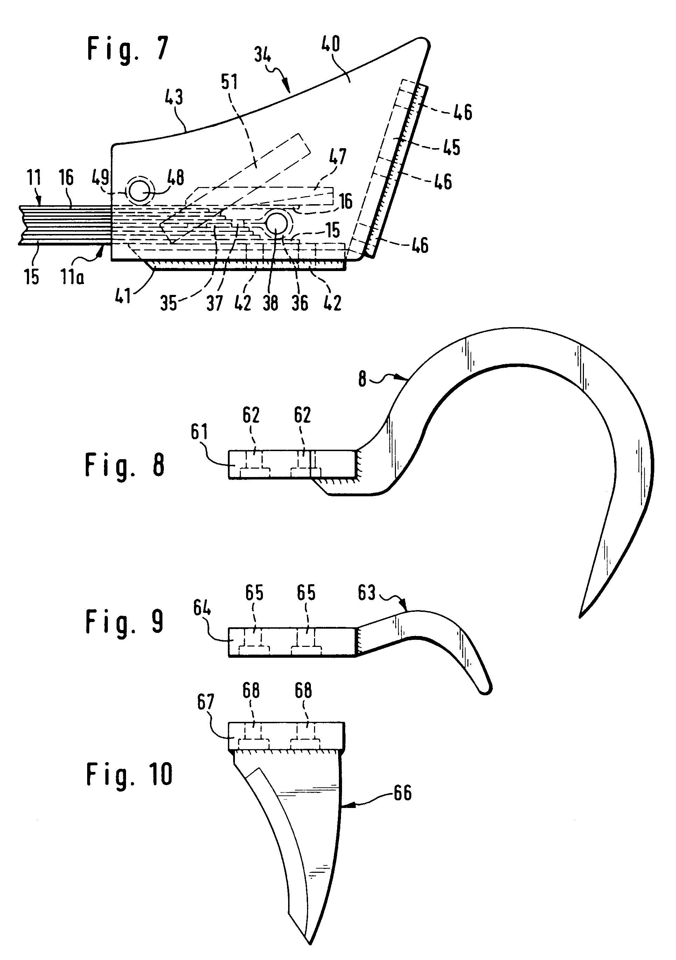

Am freien Ende des Federpaketes 11 ist eine Halterung 34 angebracht, an der Räumwerkzeuge unterschiedlicher Gestaltung befestigt werden können. Die Halterung 34 ist an einer mittleren Blattfeder 35 befestigt, deren Ende zu diesem Zweck zu einer kreisrunden Öse 36 gebogen ist (Fig. 7). Das zurückgebogene Ende ist an dem vor der Öse 36 liegenden Abschnitt der Blattfeder mit einem Niet 37 befestigt. Die Öse 36 umgibt einen besonders stark ausgeführten Befestigungsbolzen 38, der in zwei Seitenwänden 39 und 40 der Halterung 34 befestigt ist. Die beiden Seitenwände 39 und 40, die in der Einbaulage des Räumarmes übereinander liegen, sind an der in Umlaufrichtung D vorderen Seite durch eine eingeschweißte Befestigungsplatte 41 verbunden, so daß die Halterung 34 im Querschnitt U-förmig ist. In der Befestigungsplatte 41 sind vier Gewindebohrungen 42 vorhanden, in die Befestigungsschrauben verschiedener Räumwerkzeuge eingeschraubt werden können. Die kongruenten Seitenplatten 39 und 40 sind in der Ansicht nach Fig. 4 in Richtung auf die Stirnseite des Räumarmes verbreitert, wobei ihre hinteren Kanten 43 bogenförmig verlaufen. Die stirnseitigen Kanten 44 der Seitenpaltten sind derart abgeschrägt, daß sie mit der angrenzenden hinteren Kante 43 einen spitzen Winkel und mit der Befestigungsplatte 41 einen stumpfen Winkel bilden. An dieser Stirnseite liegt zwischen den Seitenplatten eine mit ihnen verschweißte Befestigungsplatte 45, die entsprechend dem Verlauf der stirnseitigen Kanten 44 einen stumpfen Winkel mit der Befestigungsplatte 41 und damit auch mit dem freien Ende des Blattfederpaketes bildet. Die Befestigungsplattte 45 hat sechs Gewindebohrungen 46 zur Aufnahme von Befestigungsschrauben eines Räumwerkzeuges.

Die Halterung 34 ist in Fig. 7 mit dem Ende des Federpaketes in einer Ansicht entsprechend Fig. 4 vergrößert dargestellt. Der Befestigungsbolzen 38 befindet sich, über die ganze Länge der Halterung 34 betrachtet, etwa in der Mitte der Halterung und, bezogen auf die Befestigungsplatte 41, etwa im vorderen Drittel und oberhalb dieser Platte 41. Die an dem Bolzen 38 befestigte Blattfeder 35 ist die mittelste Feder des Blattfederpaketes 11. Die beiden äußeren Blattfedern 15 und 16 erstrecken sich über die Öse 36 der mittleren Blattfeder 35 hinaus in Richtung auf die Stirnseite der Halterung. Die übrigen Blattfedern sind kürzer und haben Abstand von der Öse 36. Die vordere äußere Blattfeder bzw. das Deckfederblatt 15 liegt gleitend an der Befestigungsplatte 41 an, die den Quersteg des U-Profils der Halterung 34 bildet. Die andere äußere Blattfeder 16 ist gleitend an einem Verbindungssteg 47 abgestützt, der die Seitenwände 39 und 40 der Halterung 34 verbindet und mit deren Innenseiten verschweißt ist. Zur Abstützung des Federpaketes ist außerdem ein in den beiden Seitenwänden der Halterung befestigter Querbolzen 48 vorhanden, der zwischen den Seitenwänden von einer Hülse 49 umgeben ist, die ebenfalls eine Gleitführung bildet. Durch die während der Räumarbeit auf das Räumwerkzeug und die Halterung wirkenden Kräfte wird die am Bolzen 38 befestigte mittlere Blattfeder 35 auf Zug und Torsion beansprucht. Eine Bruchgefahr infolge der Torsionskräfte ist dabei weitgehend ausgeschlossen, weil die mittlere Blattfeder 35 von den benachbarten Blattfedern abgestützt wird, wobei die äußeren Blattfedern 14 und 15 bzw. 16 in der Halterung 34 und in den Bügeln 10 bis 10c sowie den Spannbügeln 12 bis 12b gleitend abgestützt sind. Die aus der Krümmung des Blattfederpaketes resultierende Biegebeanspruchung wird für die am Bolzen 38 befestigte Blattfeder 35 so gering wie möglich gehalten, weil diese Blattfeder in der neutralen Zone des Blattfederpaketes liegt. Die übrigen Blattfedern können sich gegeneinander verschieben, wenn sich der Krümmungsradius des Federpaketes ändert. Dabei verschieben sich auch die äußeren Blattfedern an ihren Gleitführungen.

An der dem Siloboden zugekehrten Seitenplatte 39 der Halterung 34 ist eine Gleitplatte 50 mit ihrer oberen Schmalseite befestigt (Fig. 3 und 4). Die Gleitplatte 50 erstreckt sich in der Draufsicht nach Fig. 4 von der in Umlaufrichtung D vorderen Seite des Blattfederpaketes 11 über dessen Rückseite hinaus schräg nach hinten und außen. Sie dient zur Abstützung der Halterung 34 gegen den Siloboden und bildet damit eine Gewichtsentlastung für das Blattfederpaket. Die Gleitplatte 50 kann an ihrer vorderen Breitseite Schmutzrillen aufweisen, in denen Schmutzpartikel beim Umlauf des Räumarmes nach hinten abgeführt werden. Eine prinzipiell gleiche, jedoch kürzere Gleitplatte 51 ist an dem unteren Steg des Bügels 10 angebracht. Sie erstreckt sich über die Breite des Blattfederpaketes ebenfalls schräg nach hinten. Am oberen Schenkel dieses Bügels 10 ist außerdem ein Kupplungsstück 52 zur Befestigung des Seiles 9 (Fig. 1) angebracht.

Die Fig. 3 und 4 sowie 8, 9 und 10 zeigen verschiedene Ausführungsformen von Räumwerkzeugen, von denen das Räumwerkzeug 8 in Fig. 8 dem in Fig. 1 schematisch dargestellten Räumwerkzeug entspricht.

In den Fig. 3 und 4 ist ein an der Halterung 34 befestigtes Räumwerkzeug 53 dargestellt, daß zwei parallele, kongruente Flachteile 54 und 55 aufweist, die an einen sie verbindenden Befestigungssteg 56 angeschweißt sind. Der Befestigungssteg 56 ist mit sechs versenkten Zylinderkopf-Schrauben 57, die in die Gewindebohrungen 46 der Befestigungsplatte 45 eingeschraubt sind, an der Halterung 34 befestigt und hat dementsprechend dieselbe Schräglage wie die Befestigungsplatte 45 der Halterung. Die Vorderkante 58 jedes Flachteiles 54 und 55 verläuft von dem Befestigungssteg 56 aus mit einem Abschnitt 58A senkrecht zur Ebene dieses Steges und damit zur stirnseitigen Kante 44 der Halterung 34. Sie geht dann winklig in einen konkaven Abschnitt 58B über, der geradlinig in eine Spitze 59 des Flachteiles 54 bzw. 55 ausläuft. Die rückseitige Kante 60 ist in ihrem an den Befestigungssteg 56 angrenzenden Abschnitt 60A ebenfalls geradlinig und parallel zum Abschnitt 58A der Vorderkante 58 und geht dann etwa auf mittlerer Höhe des konkaven Abschnittes 58B der Vorderkante 58 in einen annähernd kreisbogenförmigen Abschnitt 60B über, der in die Spitze 59 des Flachteiles ausläuft. Das Räumwerkzeug 53 ist daher als Doppelhaken ausgebildet, der sich überwiegend senkrecht zu den stirnseitigen Kanten 44 der Halterung 34 erstreckt und mit dieser Erstreckung stumpfwinklig zur Längsachse des freien Endes 11a des Federpaketes 11 liegt. Der vordere Teil des Räumwerkzeuges mit der Spitze 59 und dem an sie angrenzenden Bereich liegt dabei in bezug auf die Umlaufrichtung D vor der Ebene des freien Endes der vorderen Blattfeder 15. Für die zurückgekrümmte Arbeitslage des Räumarmes 3 folgt aus dieser Konstruktion, daß das Räumwerkzeug 53 im wesentlichen in der Zugachse des Räumarmes 3 liegt, wodurch die Torsionsbeanspruchung der Blattfedern besonders gering ist. Dieses Räumwerkzeug ist insbesondere für den Einsatz in Silos bestimmt, in denen Gut mit hohem Feuchtegehalt gespeichert wird, so daß Verunreinigungen des Gutes durch Korrosion auftreten können. Für diesen Einsatzzweck ist das Räumwerkzeug aus Edelstahl hergestellt.

Das Räumwerkzeug 8 nach Fig. 8 ist als kreisbogenförmige Kralle ausgeführt, die ebenfalls eine nach vorne gerichtete Spitze aufweist. Dieses Räumwerkzeug hat eine angeschweißte Anschlußplatte 61, die zum Anschrauben an die Befestigungsplatte 41 der Halterung 34 vorgesehen ist. Die Anschlußplatte 61 hat dementsprechend vier Bohrungen 62 zur versenkten Aufnahme von Zylinderkopf-Schrauben, die in die Gewindebohrungen 42 der Befestigungsplatte 41 eingeschraubt werden. Das Räumwerkzeug 8 ist insbesondere zum Einsatz in Silos vorgesehen, in denen Holzspäne gespeichert werden.

Fig. 9 zeigt ein Räumwerkzeug 63, das eine gleiche angeschweißte Anschlußplatte 64 mit vier Bohrungen 65 aufweist und als kurze, sichelartige Kralle ausgeführt ist. Dieses Räumwerkzeug ist zum Auflockern von Hackschnitzeln bestimmt, die im Silo gespeichert werden.

Das Räumwerkzeug 66 nach Fig. 10 ist hornförmig gestaltet und annähernd senkrecht zu seiner Anschlußplatte 67 ausgerichtet, die ebenfalls vier Bohrungen 68 zur Befestigung an der Befestigungsplatte 41 aufweist. Dieses Räumwerkzeug kann mit einem einzelnen Flachteil, aber auch mit zwei Flachteilen als Doppel-Horn ausgeführt sein und arbeitet im wesentlichen als Kratzer zur Auflockerung des Gutes.

Der wesentliche Vorteil des beschriebenes Räumarmes liegt in der Verschleiß- und Bruchfestigkeit, wozu die auch gegen Schmutz geschützte Lage der mit der Werkzeughalterung verbundenen Blattfeder 35 in der Mitte des Blattfederpaketes beiträgt, ebenso auch die Gestaltung der Spannbügel 12 mit den Anschlägen 29, die Anordnung des verschleißfesten Deckfederblattes 15 und die Gleitplatten 50 und 51, die den Räumarm abstützen.

## Patentansprüche

1. Silo-Austragvorrichtung mit einem im Silo befindlichen Rotor (2), an dem mindestens ein Räumarm (3; 3a) befestigt ist, der ein Blattfederpaket (11) mit durch Bügel (10; 12) aneinanderliegend gehaltenen Blattfedern sowie an seinem freien Ende eine an einer der Blattfedern (35) befestigte Halterung (34) für ein Räumwerkzeug (8) aufweist und in seiner bis nahe an den Silomantel (7) reichenden Erstreckung entgegen dem Drehsinn (D) des Rotors (2) zurückgekrümmt gehalten ist,
dadurch gekennzeichnet, daß die Halterung (34) an einer mittleren Blattfeder (35) des freien Endes (11a) des Blattfederpaketes (11) befestigt ist, und daß die beiden äußeren Blattfedern (14, 15 und 16) des freien Endes (11a) in der Halterung (34) gleitend abgestützt sind.

2. Silo-Austragvorrichtung nach Anspruch 1,
dadurch gekennzeichnet, daß die Befestigungsstelle (36, 38) der mittleren Blattfeder (35) an der Halterung (34) etwa in deren Mitte liegt, bezogen auf die Längserstreckung der Halterung (34) in Richtung des Blattfederpaketes (11).

3. Silo-Austragvorrichtung nach Anspruch 1 oder 2,
dadurch gekennzeichnet, daß die Halterung (34) U-Profil hat, und daß die in Umlaufrichtung (D) des Räumarmes (3; 3a) in der Halterung (34) vorne liegende Blattfeder (15) an dem Quersteg (41) des U-Profils und die andere äußere Blattfeder (16) an einem Verbindungssteg (47) der die Profilschenkel bildenden Seitenplatten (39 und 40) der Halterung (34) gleitend abgestützt ist.

4. Silo-Austragvorrichtung nach einem der Ansprüche 1 bis 3,
dadurch gekennzeichnet, daß mindestens einige der Bügel als Spannbügel (12; 12a; 12b) ausgeführt sind, die an der äußeren Blattfeder (14; 15), die in Umlaufrichtung (D) des Räumarmes (3) vorne liegt, mittels Schenkelfedern (25) abgestützt sind, wobei in jedem dieser Spannbügel (12; 12a; 12b) eine Schenkelfeder (25) gelagert ist, deren Federwendel (26) quer zur Längsachse des Blattfederpaketes (11) liegt und deren Schenkel (27 und 28) an der äußeren Blattfeder (14; 15) anliegen, und daß die Bewegung der Federwendel (26) in Richtung auf das Blattfederpaket (11) durch einen Anschlag (29) begrenzt ist, der an dem Spannbügel (12; 12a; 12b) befestigt ist.

5. Silo-Austragvorrichtung nach Anspruch 4,
dadurch gekennzeichnet, daß der Anschlag eine Platte (29) mit mindestens einer Ausnehmung (31) ist, die von einem der Federschenkel (28) mit Spiel durchsetzt ist, und daß die Platte (29) mit ihrer dem Blattfederpaket (11) zugekehrten Oberkante (30) näher an der äußeren Blattfeder (14; 15) liegt als die Federwendel (26).

6. Silo-Austragvorrichtung nach einem der Ansprüche 1 bis 5,
dadurch gekennzeichnet, daß die am freien Ende (11a) des Blattfederpaketes (11) befindliche äußere, in Umlaufrichtung (D) des Räumarmes (3) vorne liegende Blattfeder (15) als verschleißfestes Deckfederblatt (15) ausgeführt ist.

7. Silo-Austragvorrichtung nach Anspruch 6,
dadurch gekennzeichnet, daß sich das Deckfederblatt (15) etwa über die halbe Länge des Blattfederpaketes (11) erstreckt.

8. Silo-Austragvorrichtung nach einem der Ansprüche 1 bis 7,
dadurch gekennzeichnet, daß an der Halterung (34) Räumwerkzeuge (8; 53; 63; 66) unterschiedlicher Gestaltung auswechselbar zu befestigen sind.

9. Silo-Austragvorrichtung nach Anspruch 8,
dadurch gekennzeichnet, daß die Halterung (34) eine an der Stirnseite des Blattfederpaketes (11) befindliche Befestigungsplatte (45) für ein Räumwerkzeug (53) aufweist, und daß die Befestigungsplatte (45) zur Längserstreckung des Endes (11a) des Blattfederpaketes (11) winklig ausgerichtet ist.

10. Silo-Austragvorrichtung nach Anspruch 9,
dadurch gekennzeichnet, daß sich die Befestigungsplatte (45) im stumpfen Winkel zum freien Ende (11a) des Blattfederpaketes (11) und in bezug auf die Umlaufrichtung (D) des Räumarmes (3) nach hinten erstreckt.

11. Silo-Austragvorrichtung nach einem der Ansprüche 1 bis 11,
dadurch gekennzeichnet, daß sich das an der Halterung (34), insbesondere an deren stirnseitiger Befestigungsplatte (45) anzubringende Räumwerkzeug (53) von seiner Befestigungsstelle aus überwiegend senkrecht zu einer Ebene erstreckt, die stumpfwinklig zur Ebene des Endes der mittleren Blattfeder (35) entgegen der Umlaufrichtung (D) des Räumarmes (3) liegt, und daß das Räumwerkzeug (53) in eine hakenartig gebogene Spitze (59) ausläuft, die in bezug auf die Umlaufrichtung (D) des Räumarmes (3) nach vorne gerichtet ist.

12. Silo-Austragvorrichtung nach Anspruch 10,
dadurch gekennzeichnet, daß das Räumwerkzeug (53) als Doppelhaken mit zwei parallelen kongruenten Flachteilen (54 und 55) ausgebildet ist.

13. Silo-Austragvorrichtung nach einem der Ansprüche 1 bis 11,
dadurch gekennzeichnet, daß die Halterung (34) eine an einer Längsseite des Blattfederpaketes (11) befindliche Befestigungsplatte (41) für ein Räumwerkzeug (8; 63; 66) aufweist, und daß diese Befestigungsplatte (41) parallel zur Breitseite des Endes (11a) des Blattfederpaketes (11) liegt.

14. Silo-Austragvorrichtung nach Anspruch 13,
dadurch gekennzeichnet, daß an der längsseitigen Befestigungsplatte (41) wahlweise eine über ihre überwiegende Länge etwa kreisbogenförmige Kralle (8), eine kurze sichelartige Kralle (63) oder ein hornförmiger, zur Befestigungsplatte etwa senkrechter Kratzer (66) zu befestigen ist.

15. Silo-Austragvorrichtung nach einem der Ansprüche 1 bis 14,
dadurch gekennzeichnet, daß an der Halterung (34) und/oder an dem ihr benachbarten, das Blattfederpaket (11) umgreifenden Bügel (10) eine Gleitplatte (50; 51) zum Abstützen des Räumarmes (3) gegen den Siloboden angebracht ist.

## Claims

1. Discharge device for a silo with a rotor (2) located in the silo, to which at least one clearing arm (3; 3a) is attached, which comprises a set of leaf springs (11) with leaf springs held one against the other by clips (10; 12) and at its free end a mounting (34) attached to one of the leaf springs (35), for a clearing tool (8) and in its extent reaching close up to the silo surface (7), is held bent back in opposition to the direction of rotation (D) of the rotor (2), characterised in that the mounting (34) is attached to a central leaf spring (35) of the free end (11a) of the set of leaf springs (11) and that the two outer leaf springs (14, 15 and 16) of the free end (11a) are supported to slide in the mounting (34).

2. Discharge device for a silo according to Claim 1, characterised in that the attachment point (36, 38) of the central leaf spring (35) on the mounting (34) lies approximately in its centre, with respect to the longitudinal extent of the mounting (34) in the direction of the set of leaf springs (11).

3. Discharge device for a silo according to Claim 1 or 2, characterised in that the mounting (34) has a U-section and that the leaf spring (15) located at the front in the direction of rotation (D) of the clearing arm (3; 3a) in the mounting (34) is supported to slide on the transverse web (41) of the U-section and the other outer leaf spring (16) is supported to slide on a connecting web (47) of the side plates (39 and 40) of the mounting (34) forming the sides of the section.

4. Discharge device for a silo according to one of Claims 1 to 3, characterised in that at least some of the clips are constructed as clamps (12; 12a; 12b), which are supported on the outer leaf spring (14; 15), which lies at the front in the direction of rotation (D) of the clearing arm (3), by means of leg springs (25), there being mounted in each of these clamps (12; 12a; 12b) a leg spring (25), whereof the spring coil (26) lies at right angles to the longitudinal axis of the set of leaf springs (11) and whereof the sides (27 and 28) bear against the outer leaf spring (14; 15), and that the movement of the spring coil (26) in the direction of the set of leaf springs (11) is limited by a stop (29), which is attached to the clamp (12; 12a; 12b).

5. Discharge device for a silo according to Claim 4, characterised in that the stop is a plate (29) with at least one recess (31), which one of the spring legs (28) penetrates with clearance, and that the plate (29) lies with its upper edge (30) facing the set of leaf springs (11) closer to the outer leaf spring (14; 15) than the spring coil (26).

6. Discharge device for a silo according to one of Claims 1 to 5, characterised in that the outer leaf spring (15) located at the free end (11a) of the set of leaf springs (11), lying at the front in the direction of rotation (D) of the clearing arm (3), is constructed as a wear-resistant covering spring leaf (15).

7. Discharge device for a silo according to Claim 6, characterised in that the covering spring leaf (15) extends approximately over half the length of the set of leaf springs (11).

8. Discharge device for a silo according to one of Claims 1 to 7, characterised in that clearing tools (8; 53; 63; 66) of different construction are to be exchangeably attached to the mounting (34).

9. Discharge device for a silo according to Claim 8, characterised in that the mounting (34) comprises an attachment plate (45) for a clearing tool (53), located on the end face of the set of leaf springs (11), and that the attachment plate (45) is aligned in an angular manner with the longitudinal extent of the end (11a) of the set of leaf springs (11).

10. Discharge device for a silo according to Claim 9, characterised in that the attachment plate (45) extends at an obtuse angle towards the free end (11a) of the set of leaf springs (11) and rearwards with respect to the direction of rotation (D) of the clearing arm (3).

11. Discharge device for a silo according to one of Claims 1 to 11, characterised in that the clearing tool (53) to be located on the mounting (34), in particular on its attachment plate (45) on the end face, extends from its fastening point predominantly perpendicularly to a plane, which lies at an obtuse angle to the plane of the end of the central leaf spring (35) in opposition to the direction of rotation (D) of the clearing arm (3), and that the clearing tool (53) terminates in a tip (59) bent in the form of a hook, which is directed forwards with regard to the direction of rotation (D) of the clearing arm (3).

12. Discharge device for a silo according to Claim 10, characterised in that the clearing tool (53) is constructed as a double hook with two parallel, congruent flat parts (54 and 55).

13. Discharge device for a silo according to one of Claims 1 to 11, characterised in that the mounting (34) comprises an attachment plate (41) for a clearing tool (8; 63; 66), located on one longitudinal side of the set of leaf springs (11), and that this attachment plate (41) lies parallel to the broad side of the end (11a) of the set of leaf springs (11).

14. Discharge device for a silo according to Claim 13, characterised in that a claw (8) which is approximately circular over its predominant length, a short sickle-shaped claw (63) or a horn-shaped scraper (66) approximately perpendicular to the attachment plate is to be attached optionally on the long-sided fastening plate (41).

15. Discharge device for a silo according to one of Claims 1 to 14, characterised in that a sliding plate (50; 51) for supporting the clearing arm (3) against the silo base is located on the mounting (34) and/or on the clip (10) adjacent thereto and engaging around the set of leaf springs (11).

## Revendications

1. Dispositif d'extraction pour silo, avec un rotor (2) situé dans le silo et sur lequel est fixé un bras de raclage (3; 3a), au moins, qui présente un paquet de ressorts à lames (11), avec des ressorts maintenus les uns contre les autres par des étriers (10; 12), ainsi qu'un support (34), fixé sur l'un des ressorts à lames (35) sur son extrémité libre, pour un outil de raclage (8), ce bras étant maintenu et recourbé à l'inverse du sens de rotation (D) du rotor (2), dans son extension jusqu'au voisinage de l'enveloppe (7) du silo, caractérisé en ce que le support (34) est fixé sur un res sort à lames central (35) de l'extrémité libre (11a) du paquet de ressorts à lames (11), et en ce que les deux ressorts à lames externes (14, 15 et 16) de l'extrémité libre (11a) ont un supportage glissant dans le support (34).

2. Dispositif d'extraction pour silo suivant la revendication 1, caractérisé en ce que le point de fixation (36, 38) du ressort à lames central (35) sur le support (34) se situe à peu près au centre de ce dernier, rapporté à l'extension longitudinale du support (34) dans le sens du paquet de ressorts à lames (11).

3. Dispositif d'extraction pour silo suivant l'une des revendications 1 ou 2, caractérisé en ce que le support (34) a un profil en U, et en ce que le ressort à lames (15), situé en avant dans le support (34), dans le sens de rotation (D) du bras de raclage (3; 3a), a un supportage glissant sur la traverse (41) du profil en U, l'autre ressort à lames externe (16) ayant un supportage glissant sur un profil de jonction (47) des plaques latérales (39 et 40) du support (34), formant les branches du profil.

4. Dispositif d'extraction pour silo suivant l'une quelconque des revendications 1 à 3, caractérisé en ce que quelques-uns, au moins, des étriers sont réalisés sous forme d'étriers de tension (12; 12a; 12b), supportés au moyen de ressorts à branches (25) sur le ressort à lames externe (14; 15), situé en avant dans le sens de rotation (D) du bras de raclage (3), un ressort à branches (25), dont la spirale (26) se situe à la transversale de l'axe longitudinal du paquet de ressorts à lames (11), et dont les branches (27 et 28) s'appliquent sur le ressort à lames externe (14; 15), étant logé dans chacun de ces étriers de tension (12; 12a; 12b), et en ce que le mouvement de la spirale (26) en direction du paquet de ressorts à lames (11) est limité par une butée (29), fixée sur l'étrier de tension (12; 12a; 12b).

5. Dispositif d'extraction pour silo suivant la revendication 4, caractérisé en ce que la butée est une plaque (29) munie d'un évidement (31), au moins, que traverse avec jeu l'une des branches de ressort (28), et en ce que la plaque (29) est plus proche du ressort à lames externe (14; 15), par son bord supérieur (30) tourné vers le paquet de ressorts à lames (11), que la spirale (26).

6. Dispositif d'extraction pour silo suivant l'une quelconque des revendications 1 à 5, caractérisé en ce que le ressort à lames externe (15), situé sur l'extrémité libre (11a) du paquet de ressorts (11), en avant dans le sens de rotation (D) du bras de raclage (3), est réalisé sous forme de lame de ressort de couverture (15) résistante à l'usure.

7. Dispositif d'extraction pour silo suivant la revendication 6, caractérisé en ce que la lame de ressort de couverture (15) s'étend à peu près sur la moitié de la longueur du paquet de ressorts à lames (11).

8. Dispositif d'extraction pour silo suivant l'une quelconque des revendications 1 à 7, caractérisé en ce que des outils de raclage (8; 53; 63; 66) interchangeables, de configurations différentes, peuvent être fixés sur le support (34).

9. Dispositif d'extraction pour silo suivant la revendication 8, caractérisé en ce que le support (34) présente une plaque de fixation (45) pour un outil de raclage (53), située sur le côté frontal du paquet de ressorts à lames (11), et en ce que la plaque de fixation (45) a une orientation angulaire par rapport à l'extension longitudinale de l'extrémité (11a) du paquet de ressorts à lames (11).

10. Dispositif d'extraction pour silo suivant la revendication 9, caractérisé en ce que la plaque de fixation (45) s'étend à angle obtus par rapport à l'extrémité libre (11a) du paquet de ressorts à lames (11), et vers l'arrière par rapport au sens de rotation (D) du bras de raclage (3).

11. Dispositif d'extraction pour silo suivant l'une quelconque des revendications 1 à 11, caractérisé en ce que l'outil de raclage (53), à placer sur le support (34), sur la plaque de fixation côté frontal (45) de ce dernier, notamment, s'étend essentiellement, à partir de son point de fixation, à la perpendiculaire d'un plan situé à angle obtus par rapport au plan de l'extrémité du ressort à lames central (35), à l'inverse du sens de rotation (D) du bras de raclage (3), et en ce que l'outil de raclage (53) se termine par une pointe (59) pliée en forme de crochet, dirigée vers l'avant par rapport au sens de rotation (D) du bras de raclage (3).

12. Dispositif d'extraction pour silo suivant la revendication 10, caractérisé en ce que l'outil de raclage (53) est réalisé sous forme de double crochet, avec deux parties plates (54 et 55) parallèles et congruentes.

13. Dispositif d'extraction pour silo suivant l'une quelconque des revendications 1 à 11, caractérisé en ce que le support (34) présente une plaque de fixation (41) pour un outil de raclage (8; 63; 66), située sur un côté longitudinal du paquet de ressorts à lames (11), et en ce que cette plaque de fixation (41) se situe à la parallèle du côté large de l'extrémité (11a) du paquet de ressorts à lames (11).

14. Dispositif d'extraction pour silo suivant la revendication 13, caractérisé par la fixation sélective, sur la plaque de fixation (41) côté longitudinal, d'une griffe (8) à peu près en arc de cercle sur la majorité de sa longueur, d'une griffe courte (63) en forme de faucille, ou d'un racloir (66) en forme de corne, à peu près perpendiculaire à la plaque de fixation.

15. Dispositif d'extraction pour silo suivant l'une quelconque des revendications 1 à 14, caractérisé par le montage, sur le support (34) et/ou l'étrier (10) adjacent à ce dernier et enserrant le paquet de ressorts à lames (11), d'une plaque de glissement (50; 51) pour le supportage du bras de raclage (3) par rapport au fond du silo.
